# EUROPÄISCHE PATENTSCHRIFT

(11) **EP 0 697 425 B1**
(45) Veröffentlichungstag und Bekanntmachung des Hinweises auf die Patenterteilung: **17.03.1999**
(21) Anmeldenummer: 95810502.5
(22) Anmeldetag: 08.08.1995
(51) Int. Cl.: C08G 59/56, C08G 59/62

(54) **Härterzusammensetzung für Epoxidharze**
Hardener blend for epoxy resins
Mélange de durcisseurs pour résines époxy

(30) Priorität: 17.08.1994 CH 2537/94
(43) Veröffentlichungstag der Anmeldung: 21.02.1996
(73) Patentinhaber: Ciba Specialty Chemicals Holding Inc., 4057 Basel (CH)
(72) Erfinder: Fischer, Walter, Dr., CH-4153 Reinach (CH)

(56) Entgegenhaltungen:
- EP-A- 0 554 823
- EP-A- 0 556 421

## Beschreibung

Die vorliegende Erfindung betrifft eine Zusammensetzung auf Basis methylenverknüpfter Cycloalkylarylpolyamine, aliphatischer, cycloaliphatischer oder araliphatischer Alkohole und alkylierter oder aralkylierter Phenole, die Verwendung dieser Zusammensetzung als Härter, eine damit härtbare Epoxidharzzusammensetzung und das entsprechende gehärtete Material.

Gemische von Polyaminen, die ein Kohlenstoffgerüst in Form methylenverbrückter Cycloalkyl- und Aromatengruppen (im folgenden auch als methylenverknüpfte Cycloalkylarylpolyamine bezeichnet) aufweisen, finden in neuerer Zeit zunehmend Anwendung zur Härtung von Epoxidharzen, da die früher häufig verwendeten rein aromatischen Polyamine, insbesondere 4,4'-Diaminodiphenylmethan, wegen der damit verbundenen toxikologischen Risiken nur noch unter aussergewöhnlichen Auflagen eingesetzt werden dürfen. Gemische von methylenverknüpften Cycloalkylarylpolyaminen und ihre Anwendung als Epoxidharzhärter sind z. B. in der EP-A-0 554 823 beschrieben und ergeben Epoxidharzbeschichtungen mit einer im allgemeinen guten Chemikalienresistenz, ausgenommen gegenüber wässerigen Carbonsäuren, wie beispielsweise Essigsäure. Den Polyaminen wird im allgemeinen noch ein aliphatischer, cycloaliphatischer oder insbesondere araliphatischer Alkohol als Viskositätsverminderer zugesetzt. Gemäss der EP-A-0 554 823 kann diesen beiden Komponenten des Härters weiterhin ein substituiertes Phenol als Härtungsbeschleuniger zugemischt werden. So ist in dem genannten Dokument beispielsweise ein Härter für Epoxidharze beschrieben, der 41,5 Gewichtsprozent eines Gemisches methylenverknüpfter Cycloalkylarylpolyamine, 41,5 Gewichtsprozent Benzylalkohol und 3,5 Gewichtsprozent Bisphenol A enthält.

Die Aufgabe der vorliegenden Erfindung ist es, einen flüssigen Epoxidhärter auf Basis methylenverknüpfter Cycloalkylarylpolyamine und aliphatischer, cycloaliphatischer oder araliphatischer Alkohole bereitzustellen, der bessere Resistenz gegen wässerige Carbonsäuren zeigt als die entsprechenden herkömmlichen Härtergemische.

Die Erfindung hat daher eine Zusammensetzung zu Gegenstand, die im wesentlichen aus den folgenden Komponenten besteht:
A1) Polyaminen der Formel (I) und/oder (II) 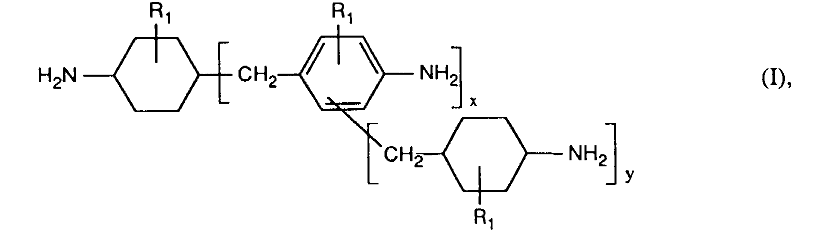 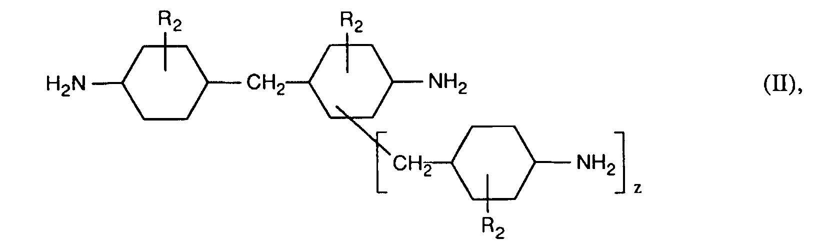 worin
   - R₁ und R₂: unabhängig voneinander ein Wasserstoffatom oder eine Methylgruppe bedeuten,
   - x: eine ganze Zahl von 1 bis 3 und
   - y: eine ganze Zahl von 0 bis 2 darstellen, wobei die Summe von x und y bis zu 4 beträgt und
   - z: eine ganze Zahl von 0 bis 2 bedeutet;
   oder
A2) einem Gemisch von Polyaminen der Formel (I) und/oder (II) mit weiteren Polyaminen;
B) einem aliphatischen, cycloaliphatischen oder araliphatischen Alkohol oder einem Gemisch entsprechender Alkohole; sowie
C) einem alkyl- und/oder aralkylsubstituierten Monophenol oder einem Gemisch entsprechender Monophenole,
wobei die Komponente C) 10 bis 50 Prozent des Gesamtgewichts der genannten Komponenten ausmacht.

Bevorzugt sind Polyamine der Formel (I) und (II), worin R₁ und R₂ Wasserstoff bedeuten. Beispiele für Polyamine der Formel (I) oder (II) sind insbesondere Bis(4-aminocyclohexyl)methan, 2,4-Bis(4-aminocyclohexylmethyl)cyclohexylamin, Trimethylentetracyclohexylamine; 4-(4'-Aminobenzyl)cyclohexylamin, 2,4-Bis(4-aminocyclohexylmethyl)anilin und teilweise hydriertes Trimethylentetraanilin. Die Herstellung derartiger Polyamine ist dem Fachmann bekannt und kann z. B. nach der EP-A-0 554 823 erfolgen, indem man ein Kondensationsprodukt aus Anilin und/oder o-Toluidin und Formaldehyd, bestehend aus 85 bis 50 Gewichtsprozent entsprechender zweikerniger Kondensationsprodukte und 15 bis 50 Gewichtsprozent entsprechender drei-und mehrkerniger Kondensationsprodukte mit Wasserstoff bei einem Druck von 3,5 bis 27,7 MPa (500 bis 4000 psig) und einer Temperatur von 150 bis 250 °C in Gegenwart eines Hydrierungskatalysators während einer Zeit von 1 bis 4 Stunden umsetzt und gegebenenfalls unerwünschte Bestandteile teilweise oder vollständig abtrennt.

Eine bevorzugte Ausführungsform der erfindungsgemässen Zusammensetzungen besteht im wesentlichen aus der Komponente A2), B) und C), wobei die Komponente A2) ein Polyamingemisch ist, das nach diesem Verfahren erhältlich ist. Derartige Polamingemische können auch geringe Mengen Monoamine, wie z. B. 4-Aminocyclohexyl-4-hydroxycyclohexyl-methan, sowie Spuren von nicht hydriertem Kondensationsprodukt aus Anilin und/oder o-Toluidin und Formaldehyd enthalten und sind teilweise kommerziell erhältlich.

Verschiedene Beispiele für entsprechende Polyamingemische sind in der EP-A-0 554 823 angeführt. Besonders bevorzugt sind Polyamingemische aus
20 bis 40 Gewichtsprozent 2,4-Bis(4-aminocyclohexylmethyl)cyclohexylamin;
40 bis 70 Gewichtsprozent 2,4-Bis(4-aminocyclohexylmethyl)anilin;
0 bis 10 Gewichtsprozent Bis(4-aminocyclohexyl)methan und gegebenenfalls weiteren vier- und/oder höherkernigen Polyaminen. Besonders bevorzugt sind hierin etwa 10 bis 20, insbesondere etwa 14 % der gesamten Aminogruppen aromatisch.

Die erfindungsgemässen Zusammensetzungen können ausser der Polyaminkomponente A1) oder A2) zusätzlich noch weitere Amine, insbesondere aliphatische, cycloaliphatische und/oder araliphatische Polyamine enthalten, z. B. in einer Menge von bis zu 50 Gewichtsprozent, bezogen auf die Gesamtmenge Amine. Insgesamt sind die Polyamine A1) oder A2) in den erfindungsgemässen Zusammensetzungen bevorzugt in einer Menge von 30 - 70 Gewichtsprozent enthalten.

Die Komponente B) ist den erfindungsgemässen Zusammensetzungen bevorzugt in einer Menge von 20 bis 50 Gewichtsprozent, bezogen auf das Gesamtgewicht der Polyamine sowie der Komponenten B) und C), zugemischt. Sie wirkt insbesondere als Viskositätserniedriger. Bevorzugt handelt es sich um bei Raumtemperatur flüssige geradkettige oder verzweigte aliphatische Alkohole mit 1 bis 10 Kohlenstoffatomen oder um flüssige cycloaliphatische oder araliphatische Alkohole mit 5 bis 10 Kohlenstoffatomen. Die Begriffe aliphatisch, cycloaliphatisch und araliphatisch sollen hierbei auch die entsprechenden Alkohole umfassen, die zusätzlich eines oder mehrere Heteroatome, insbesondere Sauerstoff-, Schwefel- oder Stickstoffatome enthalten.

Besonders bevorzugt als Komponente B) sind araliphatische Alkohole, insbesondere Furfurylalkohol und/oder Benzylalkohol.

Die Komponente C) der erfindungsgemässen Zusammensetzungen umfasst insbesondere Monophenole, die jeweils einen, zwei oder drei Substituenten aufweisen, ausgewählt aus Alkylgruppen mit 3 bis 18 Kohlenstoffatomen oder aus Phenylalkylgruppen. Beispiele für geeignete Alkylgruppen sind insbesondere n-Propyl, iso-Propyl, n-Butyl-, sec-Butyl, tert-Butyl, n-Amyl, sec-Amyl, tert-Amyl, verzweigtes und unverzweigtes Hexyl-, Heptyl, Octyl, Nonyl, Dodecyl oder Octadecyl. Bei den Phenylarylgruppen handelt es sich insbesondere um Phenyl-(C₁-C₆)Alkylgruppen. Ein besonders bevorzugtes Beispiel für eine solche Phenylarylgruppe hat die Formel 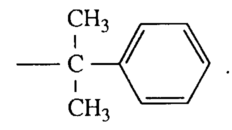 Phenole mit diesem Substituenten werden in der Technik oftmals kurz als "Cumylphenole" bezeichnet. Dies gilt auch für den vorliegenden Text, sofern nicht etwas anderes gesagt ist. Einzelne Substituenten sitzen bevorzugt in ortho oder para-Position, Substituentenpaare in 2,4- oder 2,6-Stellung und Dreiergruppen von Substituenten in 2,4,6-Stellung zur phenolischen Hydroxylgruppe. Beispiele für geeignete kommerziell erhältliche Monophenole sind 2-iso-Propylphenol, 2-sec-Butylphenol, 4-sec-Butylphenol, 2-tert-Butylphenol, 4-tert-Butylphenol, 2-tert-Amylphenol, 4-tert-Amylphenol, 4-n-Octylphenol, 4-(1,1,3,3-Tetramethylbutyl)phenol (= 4-tert-Octylphenol), 4-Nonylphenol, 4-Dodecylphenol, 4-Octadecylphenol, 4-Cumylphenol, 2,4-Dicumylphenol, 2-tert-Butyl-para-kresol, 6-tert-Butyl-ortho-kresol, 4-tert-Butyl-ortho-kresol, 6-tert-Butyl-metacresol, 4,6-Di-tert-butylphenol, 2-sec-4-tert-Butylphenol, 2,4-Di-tert-amylphenol, 6-tert-Butyl-2,4-xylenol , 4,6-Di-tert-Butyl-ortho-kresol, 4-sec-2,6-Di-tert-butyl-phenol oder 2,6-Di-tert-butyl-4-nonyl-phenol. Ganz besonders bevorzugt sind Monophenole, die einen Alkylsubstituenten mit 9 bis 12 Kohlenstoffatomen oder einen Substituenten der Formel 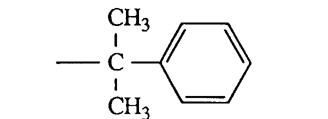 aufweisen, der sich bevorzugt in para-Stellung zu der Hydroxylgruppe des Phenols befindet, insbesondere p-Nonylphenol und p-Dodecylphenol oder Gemische der beiden.

Eine bevorzugte Ausführungsform der erfindungsgemässen Zusammensetzungen enthält die Komponente A1) oder A2) in einer Menge von 40 bis 60 Gewichtsprozent, die Komponente B) in einer Menge von 20 bis 40 Gewichtsprozent und die Komponente C) in einer Menge von 10 bis 40 Gewichtsprozent, bezogen auf das Gesamtgewicht der Komponenten A1), B) und C), wobei sich diese Prozentanteile zu 100 addieren.

Die erfindungsgemässen Zusammensetzungen eignen sich besonders als Härter für Epoxidharze. Die Erfindung betrifft daher auch härtbare Zusammensetzungen, die a) mindestens ein Epoxidharz und
b) eine Zusammensetzung, wie oben beschrieben, als Härter enthalten.

Als Epoxidharze (a), die in den erfindungsgemässen härtbaren Zusammensetzungen eingesetzt werden können, eignen sich die in der Epoxidharztechnik üblichen Epoxidharze mit mehr als einer 1,2-Epoxidgruppe im Molekül. Beispiele für Epoxidharze sind:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Sebacinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure, 4-Methylhexahydrophthalsäure oder Cyclohexan-1,4-dicarbonsäure. Weiterhin können aromatische Polycarbonsäuren Verwendung finden, wie beispielsweise Phthalsäure, Isophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.
   Die Glycidylether dieses Typs leiten sich beispielsweise von acyclischen Alkoholen ab, wie von Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.
   Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N,N-Bis-(2-hydroxyethyl)-anilin oder p,p'-Bis-(2-hydroxyethylamino)-diphenylmethan. Die Glycidylether können sich auch von einkerningen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, wie solche der oben genannten Art.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)-methan, m-Xylylendiamin oder Bis-(4-methylaminophenyl)-methan. Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly-(S-glycidyl)-verbindungen, beispielsweise Di-S-glycidylderivate, die sich von Dithiolen, wie beispielsweise Ethan-1,2-dithiol oder Bis-(4-mercaptomethylphenyl)-ether ableiten.
V) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-di-methylhydantoin oder 2-Glycidyloxy-1,3-bis-(5,5-dimethyl-1-glycidylhydantoin-3-yl)-propan. Bevorzugt verwendet man in den erfindungsgemässen härtbaren Gemischen als Epoxidharz (a) einen flüssigen oder viskosen Polyglycidylether oder -ester, insbesondere einen flüssigen oder viskosen Bisphenoldiglycidylether.

Die oben genannten Epoxidverbindungen sind bekannt und zum Teil im Handel erhältlich. Es können auch Gemische von Epoxidharzen verwendet werden.

Die Menge des eingesetzten Härtungsmittels richtet sich nach der chemischen Natur des Härtungsmittels und nach den gewünschten Eigenschaften der härtbaren Mischung und des gehärteten Produktes. Die maximale Menge kann leicht ermittelt werden. Normalerweise werden 0,75 bis 1,25 Äquivalente Aminwasserstoff pro 1 Epoxidäquivalent eingesetzt.

Die Herstellung der erfindungsgemässen härtbaren Zusammensetzungen kann in üblicher Weise durch Vermischen der Komponenten durch Handrührung oder mit Hilfe bekannter Mischaggregate, beispielsweise mittels Rührer, Kneter oder Walzen, erfolgen. Die Zusammensetzungen weisen nur eine relativ geringe Viskosität auf.

Je nach Anwendung können den erfindungsgemässen Gemischen die gebräuchlichen Zusätze beigegeben werden, wie beispielsweise Füllstoffe, Pigmente, Farbstoffe, Verlaufmittel oder Plastifizierungsmittel.

Die Härtung der erfindungsgemässen härtbaren Zusammensetzungen kann in an sich bekannter Weise ein- oder mehrstufig vorgenommen werden. Die Härtung erfolgt im allgemeinen bei Raumtemperatur oder unterhalb der Raumtemperatur oder durch Erhitzen der Gemische auf Temperaturen bis zu 120°C, insbesondere bei Temperaturen zwischen 5 und 50°C. Die Aushärtung wird auch durch eine relativ hohe relative Luftfeuchte nicht gestört.

Wie eingangs erwähnt, zeichnen sich die aus den erfindungsgemässen Gemischen hergestellten Formkörper und Beschichtungen durch eine hohe Chemikalienresistenz, insbesondere gleichzeitig gegenüber wässerigen Carbonsäuren, wie beispielsweise wässriger Essigsäure mit einem Gehalt an Essigsäure bis zu 30 Gew-%, und hochkonzentrierten Alkoholen aus. Sie bilden einen weiteren Gegenstand der Erfindung.

Beispiel 1: 1,75 g Ancamine® X2168 (kommerziell erhältliches Gemisch von Polyaminen der Formel (I) und (II)) werden auf 60 °C erwärmt und mit 0,75 g Benzylalkohol versetzt. Dann wird abgekühlt und unter Rühren 1,0 g 2,6-Bis-tert-butyl-4-nonylphenol zugegeben. Das Gemisch weist bei 25°C eine Viskosität von 5100 mPa·s auf.

Beispiele 2 - 6: Analoge Härterzusammensetzungen werden mit den in der folgenden Tabelle angegebenen Phenolen hergestellt und ihre Viskosität bei 25 °C bestimmt.

| Beispiel | Phenol | Menge | Viskosität |
|---|---|---|---|
| 2 | 4-Nonylphenol | 1,0 g | 9920 mPa·s |
| 3 | 4-Cumylphenol | 0,5 g | 7840 mPa·s |
| 4 | 2,4-Dicumylphenol | 0,5 g | 10610 mPa·s |
| 5 | 2,4-Bis-tert-amylphenol | 0,5 g | 7200 mPa·s |
| 6 | 2-tert-butyl-4-cumylphenol | 0,5 g | 9440 mPa·s |

Beispiel 7: 3,5 g des Härters aus Beispiel 1 werden mit 5,38 g Bisphenol-A-diglycidylether mit einem Epoxidgehalt von 5,25 - 5,40 Äquivalenten/kg und einer Viskosität von 10000 - 12000 mPa·s gründlich vermischt. Das Gemisch weist nach dem Vermischen und einer kurzen Thermostatisierung eine Mischviskosität von 6400 mPa·s auf. Nach weiteren 5 Minuten bei 25 °C steigt die Viskosität auf 7040 mPa·s. Das Gemisch wird mit einer 0,200 mm-Rakel auf eine Glasplatte aufgetragen und bei 20 °C ausgehärtet.

Beispiel 8: 3,5 g des Härters aus Beispiel 1 werden mit 5,41 g Bisphenol-A-diglycidylether mit einem Epoxidgehalt von 5,25 - 5,40 Äquivalenten/kg und einer Viskosität von 10000 - 12000 mPa·s gründlich vermischt. Das Gemisch wird mit einem Pinsel auf sandgestrahlte Stahlplatten aufgetragen. Nach wenigen Stunden bei 20 °C entstehen klare, harte Schichten.

Wird das Gemisch mit einer 0,200 mm-Rakel auf eine Glasplatte aufgetragen und bei 20 °C einen Tag gehärtet, beträgt die Pendelhärte nach Persoz (gemessen mit einem Pendelhärteprüfer der Firma BYK-CHEMIE) 115 s. Nach 7 Tagen Durchhärtung bei 20 °C steigt die Persoz-Härte auf 284 s, nach 14 Tagen auf 293 s. Wird die Aushärtung bei 5 °C durchgeführt beträgt die Pendelhärte nach 7 Tagen 97 s und nach 14 Tagen 146 s. Das Gemisch härtet auch bei 20 °C und 100% relativer Luftfeuchtigkeit sowie bei 5 °C und 45% relativer Luftfeuchtigkeit befriedigend aus, wobei keine oder nur eine minimale Oberflächentrübung auftritt.

Beispiel 9: 1,75 g Ancamine® X2168 (kommerziell erhältliches Gemisch von Polyaminen der Formel (I) und (II)), 0,75 g Benzylalkohol und 1,4 g 4-Nonylphenol werden mit 5,41 g Bisphenol-A-diglycidylether mit einem Epoxidgehalt von 5,25 - 5,40 Äquivalenten/kg und einer Viskosität von 10000 - 12000 mPa·s gründlich vermischt. Das Gemisch wird mit einem Pinsel auf sandgestrahlte Stahlplatten aufgetragen. Nach wenigen Stunden bei 20 °C entstehen klare, harte Schichten.

Wird das Gemisch mit einer 0,200 mm-Rakel auf eine Glasplatte aufgetragen und bei 20 °C einen Tag gehärtet, beträgt die Pendelhärte nach Persoz (gemessen mit einem Pendelhärteprüfer der Firma BYK-CHEMIE) 97 s. Nach 7 Tagen Durchhärtung bei 20 °C steigt die Persoz-Härte auf 246 s. Wird die Aushärtung bei 5 °C durchgeführt beträgt die Pendelhärte nach 7 Tagen 91 s und nach 14 Tagen 133 s. Auch dieses Gemisch härtet bei 20 °C und 100% relativer Luftfeuchtigkeit sowie bei 5 °C und 45% relativer Luftfeuchtigkeit befriedigend aus, wobei keine oder nur eine minimale Oberflächentrübung auftritt.

Die Chemikalienresistenz wird nach einer achttägigen Härtung bei 20 °C wie folgt ermittelt: Mit den Gemischen der Beispiele 8 und 9 beschichtete Stahlplatten werden in einer Einspannvorrichtung zur Hälfte mit den Testmedien benetzt und täglich begutachtet. Die Schichten widerstehen den Chemikalien während der in nachfolgender Tabelle angegebenen Anzahl von Tagen, ohne Blasen zu werfen oder sich abzulösen.

| Testmedium | Gemisch aus Beispiel | |
|---|---|---|
| | 8 | 9 |
| 50% CH₃COOH/H₂O | 6 | 4 |
| 30% CH₃COOH/H₂O | 14 | 14 |
| 10% CH₃COOH/H₂O | >21 | >21 |
| 96% C₂H₅OH | 12 | 4 |
| Xylol | >21 | 12 |

## Patentansprüche

1. Zusammensetzung, die im wesentlichen aus den folgenden Komponenten besteht:
A1) Polyaminen der Formel (I) und/oder (II) 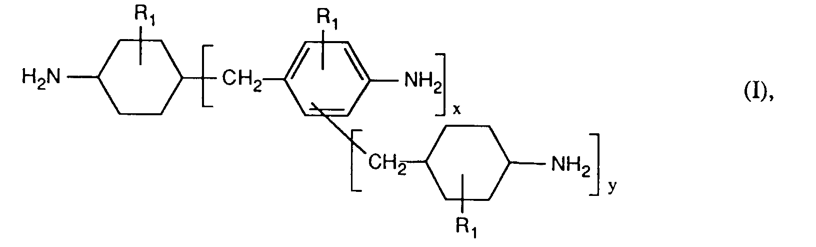 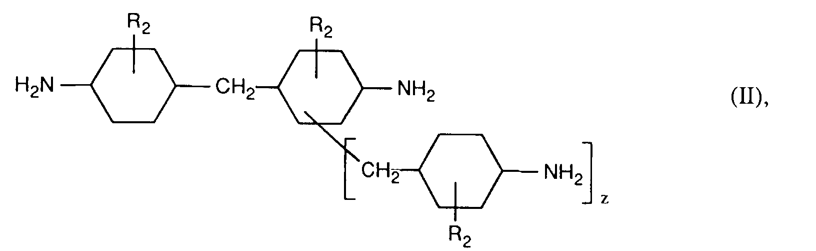 worin
R₁ und R₂ unabhängig voneinander ein Wasserstoffatom oder eine Methylgruppe bedeuten,
x eine ganze Zahl von 1 bis 3 und
y eine ganze Zahl von 0 bis 2 darstellen, wobei die Summe von x und y bis zu 4 beträgt und
z eine ganze Zahl von 0 bis 2 bedeutet;
oder
A2) einem Gemisch von Polyaminen der Formel (I) und/oder (II) mit weiteren Polyaminen;
B) einem aliphatischen, cycloaliphatischen oder araliphatischen Alkohol oder einem Gemisch entsprechender Alkohole; sowie
C) einem alkyl- und/oder aralkylsubstituierten Monophenol oder einem Gemisch entsprechender Monophenole,
wobei die Komponente C) 10 bis 50 Prozent des Gesamtgewichts der genannten Komponenten ausmacht.

2. Zusammensetzung nach Anspruch 1, wobei die Komponente A1) oder A2) ein Polyamingemisch ist, das erhältlich ist, indem man ein Kondensationsprodukt aus Anilin und/oder o-Toluidin und Formaldehyd, bestehend aus 85 bis 50 Gewichtsprozent entsprechender zweikerniger Kondensationsprodukte und 15 bis 50 Gewichtsprozent entsprechender drei- und mehrkerniger Kondensationsprodukte mit Wasserstoff bei einem Druck von 3,5 bis 27,7 MPa (500 bis 4000 psig) und einer Temperatur von 150 bis 250 °C in Gegenwart eines Hydrierungskatalysators während einer Zeit von 1 bis 4 Stunden umsetzt und gegebenenfalls unerwünschte Bestandteile teilweise oder vollständig abtrennt.

3. Zusammensetzung nach Anspruch 1 oder 2, die als Polyamine ein Gemisch aus 20 bis 40 Gewichtsprozent 2,4-Bis(4-aminocyclohexylmethyl)cyclohexylamin; 40 bis 70 Gewichtsprozent 2,4-Bis(4-aminocyclohexylmethyl)anilin; 0 bis 10 Gewichtsprozent Bis(4-aminocyclohexyl)methan und gegebenenfalls weitere vier- und höherkernige Polyamine enthält, wobei bevorzugt etwa 10 bis 20 % der gesamten Aminogruppen aromatisch sind.

4. Zusammensetzung nach Anspruch 1 bis 3, bei der der Polyaminkomponente A1) oder A2) zusätzlich weitere aliphatische, cycloaliphatische und/oder araliphatische Polyamine zugemischt sind.

5. Zusammensetzung nach Anspruch 1 bis 4, die die Polyamine A1) oder A2) in einer Menge von 30 - 70 Gewichtsprozent enthält.

6. Zusammensetzung nach Anspruch 1 bis 5, die die Komponente B) in einer Menge von 20 bis 50 Gewichtsprozent, bezogen auf das Gesamtgewicht der Polyamine sowie der Komponenten B) und C), enthält.

7. Zusammensetzung nach Anspruch 1 bis 3, die die Komponente A1) oder A2) in einer Menge von 40 bis 60 Gewichtsprozent, die Komponente B) in einer Menge von 20 bis 40 Gewichtsprozent und die Komponente C) in einer Menge von 10 bis 40 Gewichtsprozent, bezogen auf das Gesamtgewicht der Komponenten A1), B) und C), enthält, wobei sich diese Prozentanteile zu 100 addieren.

8. Zusammensetzung nach Anspruch 1 bis 7, bei der die Komponente B) aus Furfurylalkohol und/oder Benzylalkohol besteht.

9. Zusammensetzung nach Anspruch 1 bis 8, bei der die Komponente C) aus einem oder mehreren Monophenolen besteht, die jeweils einen, zwei oder drei Substituenten aufweisen, ausgewählt aus Alkylgruppen mit 3 bis 18 Kohlenstoffatomen oder aus Phenylalkylgruppen.

10. Zusammensetzung nach Anspruch 9, bei der die Monophenole einen Alkylsubstituenten mit 9 bis 12 Kohlenstoffatomen oder einen Substituenten der Formel 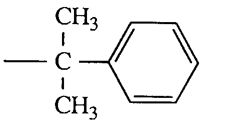 aufweisen, der sich bevorzugt in para-Stellung zu der Hydroxylgruppe des Phenols befindet.

11. Zusammensetzung nach Anspruch 10, die als Monophenol p-Nonylphenol und/oder p-Dodecylphenol enthalten.

12. Verwendung einer Zusammensetzung nach Anspruch 1 bis 11 als Härter für Epoxidharze.

13. Härtbare Zusammensetzung, die
a) mindestens ein Epoxidharz und
b) eine Zusammensetzung gemäss Anspruch 1 bis 11 als Härter enthält.

14. Die durch Härten der Zusammensetzung gemäss Anspruch 13 erhältlichen Formkörper und Beschichtungen.

## Claims

1. A composition essentially consisting of the following components:
A1) polyamines of formula (I) and/or (II) 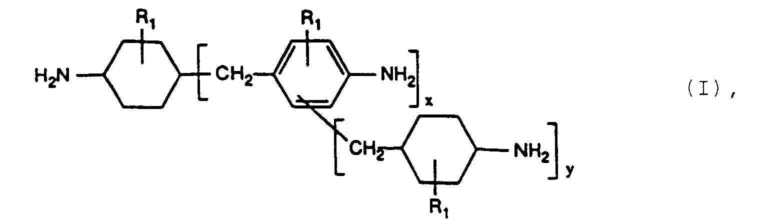 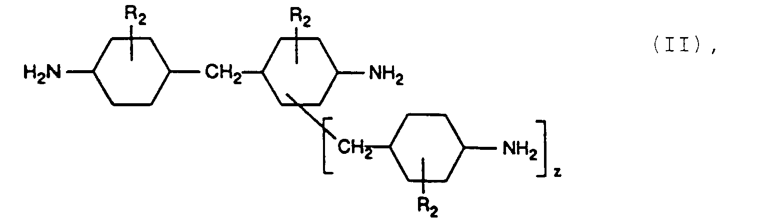 wherein
R₁ and R₂ are each independently of the other a hydrogen atom or a methyl group,
x is an integer from 1 to 3 and
y is an integer from 0 to 2,
the sum of x and y being up to and including 4, and
z is an integer from 0 to 2;
or
A2) a mixture of polyamines of formula (I) and/or (II) with further polyamines;
B) an aliphatic, cycloaliphatic or araliphatic alcohol or a mixture of corresponding alcohols; and
C) an alkyl- and/or aralkyl-substituted monophenol or a mixture of corresponding monophenols,
component C) constituting from 10 to 50 per cent of the total weight of the cited components.

2. A composition according to claim 1, wherein component A1) or A2) is a polyamine mixture obtainable by reacting a condensate of aniline and/or o-toluidine and formaldehyde, consisting of 85 to 50 per cent by weight of corresponding dinuclear condensates and 15 to 50 per cent by weight of corresponding tri- and polynuclear condensates, with hydrogen at a pressure of 3.5 to 27.7 MPa (500 to 4000 psig) and at a temperature from 150 to 250EC in the presence of a hydrogenation catalyst over 1 to 4 hours and partially or completely separating off any unwanted constituents.

3. A composition according to claim 1 or 2, comprising as polyamines a mixture of 20 to 40 per cent by weight of 2,4-bis (4-aminocyclohexylmethyl)cyclohexylamine; 40 to 70 per cent by weight of 2,4-bis(4-aminocyclohexylmethyl)aniline; 0 to 10 per cent by weight of bis(4-aminocyclohexyl)methane and, optionally, further tetranuclear and polynuclear polyamines, preferably 10 to 20% of all amino groups being aromatic.

4. A composition according to claim 1 to 3, wherein, additionally, further aliphatic, cycloaliphatic and/or araliphatic polyamines are admixed with the polyamine component A1) or A2).

5. A composition according to claim 1 to 4, comprising the polyamines A1) or A2) in an amount of 30 - 70 per cent by weight.

6. A composition according to claim 1 to 5, comprising component B) in an amount of 20 to 50 per cent by weight, based on the total weight of the polyamines as well as of components B) and C).

7. A composition according to claim 1 to 3, comprising component A1) or A2) in an amount of 40 to 60 per cent by weight, component B) in an amount of 20 to 40 per cent by weight and component C) in an amount of 10 to 40 per cent by weight, based on the total weight of components A1), B) and C), the sum of all these percentages being 100.

8. A composition according to claim 1 to 7, wherein component B) consists of furfuryl alcohol and/or benzyl alcohol.

9. A composition according to claim 1 to 8, wherein component C) consists of one or more than one monophenol, each carrying one, two or three substituents selected from alkyl groups of 3 to 18 carbon atoms or from phenylalkyl groups.

10. A composition according to claim 9, wherein the monophenols carry an alkyl substituent of 9 to 12 carbon atoms or a substituent of formula 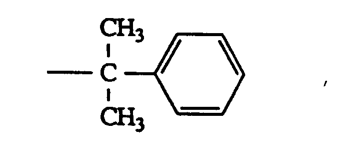 which is preferably in para-position to the hydroxyl group of the phenol.

11. A composition according to claim 10, comprising as monophenol p-nonylphenol and/or p-dodecylphenol.

12. The use of a composition according to claim 1 to 11 as a hardener for epoxy resins.

13. A curable composition comprising
a) at least one epoxy resin and
b) a composition according to claim 1 to 11 as hardener.

14. A moulding or coating obtainable by curing the composition according to claim 13.

## Revendications

1. Composition, constituée essentiellement des composants suivants :
A1) polyamines de formule (I) et/ou (II) 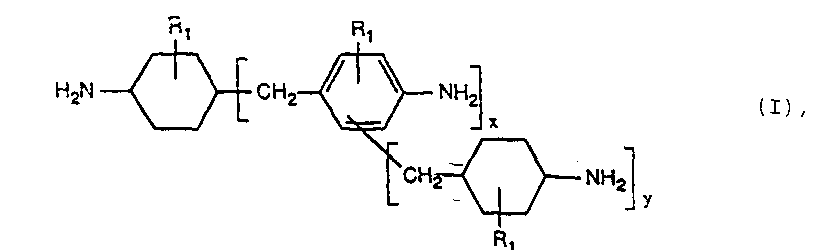 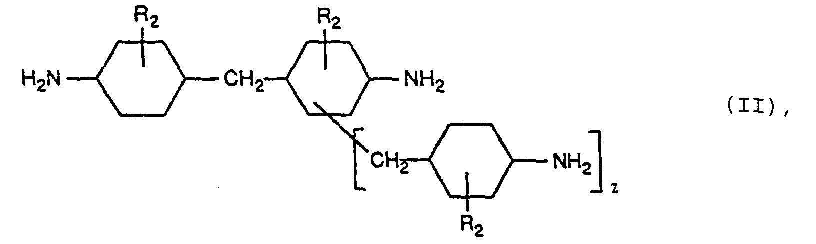 dans lesquelles
R₁ et R₂, indépendamment l'un de l'autre, représentent un atome d'hydrogène ou un groupe méthyle,
x est un nombre entier de 1 à 3 et
y est un nombre entier de 0 à 2, la somme de x et y allant jusqu'à 4, et
z est un nombre entier de 0 à 2 ;
ou
A2) un mélange de polyamines de formule (I) et/ou (II) avec d'autres polyamines ;
B) un alcool aliphatique, cycloaliphatique ou araliphatique ou un mélange d'alcools correspondants ; ainsi que
C) un monophénol substitué par alkyle et/ou aralkyle ou un mélange de monophénols correspondants,
le composant (C) étant présent dans une quantité de 10 à 50 % par rapport au poids total des composants précités.

2. Composition selon la revendication 1, le composant A1) ou A2) étant un mélange de polyamines, que l'on peut obtenir par réaction d'un produit de condensation de l'aniline et/ou de l'o-toluidine et du formaldéhyde, constitué de 85 à 50 % en poids de produits de condensation bicycliques correspondants et de 15 à 50 % en poids de produits de condensation tri- et polycycliques correspondants, avec de l'hydrogène, sous une pression de 3,5 à 27,7 MPa-(500 à 4 000 psig) et à une température de 150 à 250 °C, en présence d'un catalyseur d'hydrogénation, en l'espace de 1 à 4 heures et en éliminant partiellement ou complètement les constituants éventuellement non souhaités.

3. Composition selon la revendication 1 ou 2, contenant en tant que polyamines un mélange de 20 à 40 % en poids de 2,4-bis-(4-aminocyclohexylméthyl)-cyclohexylamine ; de 40 à 70 % en poids de 2,4-bis-(4-aminocyclohexylméthyl)-aniline; de 0 à 10 % en poids de bis-(4-aminocyclohexyl)-méthane et éventuellement d'autres polyamines tétra- et polycycliques, en préférant que d'environ 10 à 20 % en poids de la totalité des groupes amino soient aromatiques.

4. Composition selon les revendications 1 à 3, où en plus l'on ajoute par mélange aux composants polyamine A1) ou A2) d'autres polyamines aliphatiques, cycloaliphatiques et/ou araliphatiques.

5. Composition selon les revendications 1 à 4, qui contient les polyamines A1) ou A2) dans une quantité de 30 à 70 % en poids.

6. Composition selon les revendications 1 à 5, qui contient le composant B) dans une quantité de 20 à 50 % en poids par rapport au poids total des polyamines ainsi que du composant B) et C).

7. Composition selon les revendications 1 à 3, qui contient le composant A1) ou A2) dans une quantité de 40 à 60 % en poids, le composant B) dans une quantité de 20 à 40 % en poids, le composant C) dans une quantité de 10 à 40 % en poids, par rapport au poids total des composants A1), B) et C), ces taux en pourcentage s'additionnant à 100.

8. Composition selon les revendications 1 à 7, dans laquelle le composant B) est constitué d'alcool furfurylique ou d'alcool benzylique.

9. Composition selon les revendications 1 à 8, dans laquelle le composant C) est constitué d'un ou plusieurs monophénols, qui présentent chacun un, deux ou trois substituants pris parmi les groupes alkyle comportant de 3 à 18 atomes de carbone ou des groupes phénylalkyle.

10. Composition selon la revendication 9, dans laquelle les monophénols présentent un substituant alkyle avec 9 à 12 atomes de carbone ou un substituant de formule 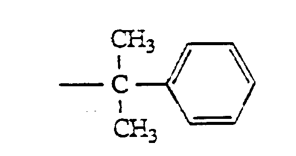 qui se trouve de préférence en position para par rapport au groupe hydroxyle du phénol.

11. Composition selon la revendication 10, qui contient en tant que monophénol le p-nonylphénol et/ou le p-dodécylphénol.

12. Utilisation d'une composition selon les revendications 1 à 11, en tant que durcisseur de résines époxydes.

13. Composition durcissable qui contient
a) au moins une résine époxyde et
b) une composition selon les revendications 1 à 11, en tant que durcisseur.

14. Corps moulés et revêtements que l'on peut obtenir par durcissement de la composition selon la revendication 13.
